# EUROPEAN PATENT APPLICATION

(11) **EP 4 040 454 A1**
(43) Date of publication of application: **10.08.2022**
(21) Application number: 20871614.2
(22) Date of filing: 01.10.2020
(51) Int. Cl.: H01F 1/26, C08K 3/01, C08K 3/36, C08L 63/00, C08L 101/00, H01F 27/255

(54) **RESIN COMPOSITION AND MOLDED ARTICLE**

(30) Priority: 04.10.2019 JP 2019183558
(71) Applicant: Sumitomo Bakelite Co.Ltd., Shinagawa-ku Tokyo 140-0002 (JP)
(72) Inventor: NOBE, Wakana, Tokyo 140-0002 (JP); YOSHIDA, Masato, Tokyo 140-0002 (JP); YAMASHITA, Katsushi, Tokyo 140-0002 (JP)
(74) Representative: Müller-Boré & Partner Patentanwälte PartG mbB
(86) International application number: PCT/JP2020/037405
(87) International publication number: WO 2021/066089

(57) **Abstract**

Provided are a resin composition, which is used for transfer molding, including a resin (A), a magnetic powder (B) having a median diameter of 7.5 to 100 µm, and particles (C) having a median diameter of 0.2 to 5 µm, in which a saturation magnetic flux density of a molded article obtained by transfer molding the resin composition at 175°C is equal to or more than 1.1 T; and a molded article formed of the resin composition. The particles (C) may include a magnetic powder or a non-magnetic powder.

## Description

### TECHNICAL FIELD

The present invention relates to a resin composition and a molded article. More specifically, the present invention relates to a resin composition used for transfer molding and a molded article formed of the resin composition.

### BACKGROUND ART

An attempt to form a magnetic component (for example, a magnetic core of a reactor, and the like) by heating and molding a material including a magnetic powder and a resin has been known.

Patent Document 1 discloses a composite material including a magnetic powder and a polymer material containing the powder in a dispersed state. According to Patent Document 1, a content of the magnetic powder with respect to the entire composite material is more than 50% by volume and equal to or less than 75% by volume, a saturation magnetic flux density of the composite material is equal to or more than 0.6 T, and a relative magnetic permeability of the composite material is more than 20 and equal to or less than 35.

### RELATED DOCUMENT

### PATENT DOCUMENT

[Patent Document 1] Japanese Unexamined Patent Publication No. 2014-063923

### SUMMARY OF THE INVENTION

### TECHNICAL PROBLEM

With the further miniaturization and weight reduction of electronic devices in recent years, the magnetic component is also required to be miniaturized and lightened.

In view of this situation, the present inventor has conducted a study for the purpose of providing a resin composition which is preferably used for manufacturing a small and lightweight magnetic component.

### SOLUTION TO PROBLEM

As a result of studies, the present inventor has completed the inventions provided below and solved the above-described problems.

According to the present invention, a resin composition, which is used for transfer molding, including a resin (A), a magnetic powder (B) having a median diameter of 7.5 to 100 µm, and particles (C) having a median diameter of 0.2 to 5 µm, in which a saturation magnetic flux density of a molded article obtained by transfer molding the resin composition at 175°C is equal to or more than 1.1 T, is provided.

In addition, according to the present invention, a molded article formed of the above-described resin composition is provided.

### ADVANTAGEOUS EFFECTS OF INVENTION

The resin composition of the present invention is preferably used for manufacturing a small and lightweight magnetic component. That is, by using the resin composition of the present invention, a small and lightweight magnetic component can be manufactured.

### BRIEF DESCRIPTION OF THE DRAWINGS

Figs. 1A and 1B are diagrams schematically showing a coil including a magnetic core.
Figs. 2A and 2B are diagrams schematically showing a coil including a magnetic core (aspect different from that of Figs. 1A and 1B).
Figs. 3A and 3B are diagrams schematically showing an integrated inductor.

### DESCRIPTION OF EMBODIMENTS

Hereinafter, embodiments of the present invention will be described in detail with reference to the drawings.

In all drawings, the same constituents are designated by the same reference numerals, and description thereof will not be repeated.

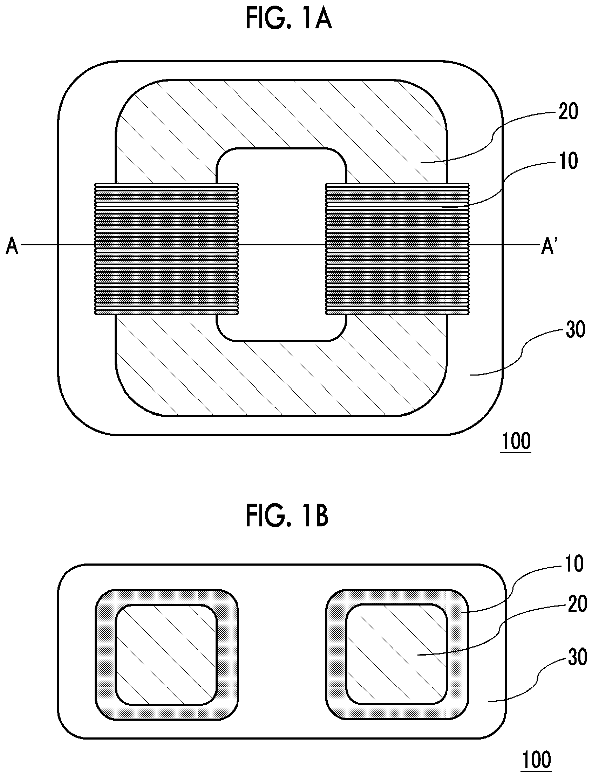

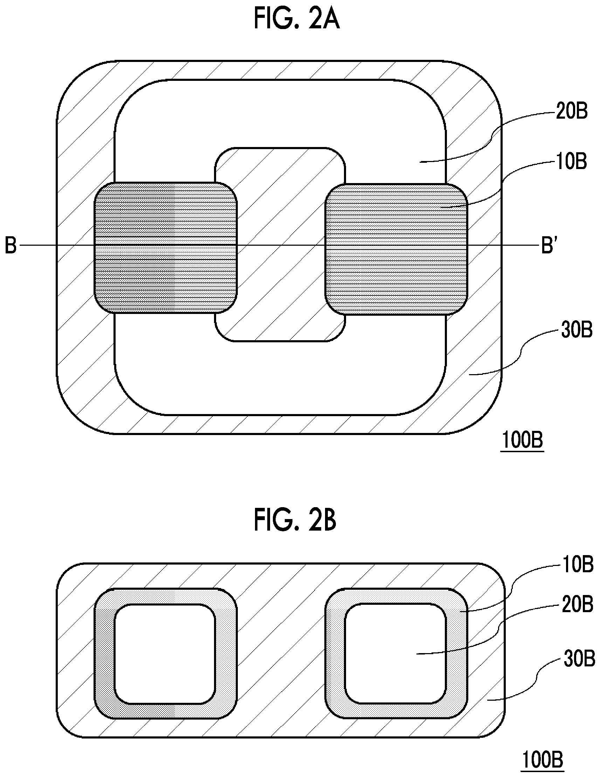

In order to avoid complication, (i) in a case where there are a plurality of the same constituents in the same drawing, only one of them is coded, and in a case where all constituents are not coded, or (ii) particularly in Fig. 2A and later, the same constituents as in Figs. 1A and 1B may not be re-coded.

All drawings are for illustration purposes only. A shape and dimensional ratio of each member in the drawings do not necessarily correspond to the actual article.

In the present specification, a notation "X to Y" in a description of a numerical range means equal to or more than X and equal to or less than Y unless otherwise specified. For example, "1% to 5% by mass" means "equal to or more than 1% by mass and equal to or less than 5% by mass".

In a notation of a group (atomic group) in the present specification, a notation which does not indicate whether it is substituted or unsubstituted includes both those having no substituent and those having a substituent. For example, an "alkyl group" includes not only an alkyl group having no substituent (unsubstituted alkyl group) but also an alkyl group having a substituent (substituted alkyl group).

Unless otherwise specified, a term "organic group" in the present specification means an atomic group obtained by removing one or more hydrogen atoms from an organic compound. For example, a "monovalent organic group" represents an atomic group obtained by removing one hydrogen atom from any organic compound.

### <Resin composition>

A resin composition according to the present embodiment is used for transfer molding. In other words, the resin composition according to the present embodiment is used as a material for manufacturing a molded article by a transfer molding method.

In addition, the resin composition according to the present embodiment includes a resin (A), a magnetic powder (B) having a median diameter of 7.5 to 100 µm, and particles (C) having a median diameter of 0.2 to 5 µm.

In addition, a saturation magnetic flux density of a molded article obtained by transfer molding the resin composition according to the present embodiment at 175°C is equal to or more than 1.1 T.

In the present embodiment, by manufacturing a magnetic component by transfer molding, it is possible to manufacture a magnetic component which is smaller and/or lighter than a magnetic component manufactured by a conventional compression molding method. In addition, by manufacturing the magnetic component by transfer molding, it is easy to manufacture a magnetic component having a relatively complicated shape.

In the present embodiment, the magnetic powder (B) having a median diameter of 7.5 to 100 µm is used. By using a magnetic powder having a large particle size, it is easy to increase the saturation magnetic flux density.

In the present embodiment, the magnetic powder (B) having a relatively large median diameter and the particles (C) having a relatively small median diameter are used in combination. As a result, a sufficient fluidity can be obtained during transfer molding. Details of the mechanism are not clear, but it is presumed that the particles (C) act as a "lubricant" of the magnetic powder (B). In addition or alternatively, it is presumed that the particles (C) act as a "dispersion medium" for the magnetic powder (B), thereby suppressing precipitation of the magnetic powder (B) during melting.

The saturation magnetic flux density of a molded article obtained by transfer molding the resin composition according to the present embodiment at 175°C is equal to or more than 1.1 T. By designing the resin composition in this way, it is possible to obtain a magnetic component having sufficient magnetic performance even in a case where the magnetic component is small and lightweight.

Components, physical properties, and the like of the resin composition according to the present embodiment will be specifically described below.

### (Resin (A))

The resin composition according to the present embodiment includes a resin (A).

The resin (A) can be a thermoplastic resin or a thermosetting resin. From the viewpoint of application as transfer molding, and heat resistance of the magnetic component, the resin (A) preferably includes a thermosetting resin. More specifically, the resin (A) includes a thermosetting resin in an amount of preferably equal to or more than 50% by mass, more preferably equal to or more than 75% by mass, and still more preferably equal to or more than 90% by mass in the total amount of the resin (A).

Examples of the thermosetting resin include an epoxy resin, a phenol resin, a polyimide resin, a bismaleimide resin, a urea resin, a melamine resin, a polyurethane resin, a cyanate ester resin, a silicone resin, an oxetane resin (oxetane compound), a (meth) acrylate resin, an unsaturated polyester resin, a diallyl phthalate resin, and a benzoxazine resin. These may be used alone or in combination of two or more thereof.

In particular, the resin (A) preferably includes an epoxy resin. As a result, it is easy to obtain good moldability in transfer molding under general conditions (temperature, injection pressure to a mold, and the like).

Examples of the epoxy resin include novolac-type phenol resins such as a phenol novolac resin, a cresol novolac resin, a bisphenol A-type novolac resin, and a triazine skeleton-containing phenol novolac resin; phenol resins such as resol-type phenol resins, for example, an unmodified resol phenol resin and oil-modified resol phenol resins modified with tung oil, linseed oil, walnut oil, or the like, and aralkyl-type phenol resins, for example, a phenol aralkyl resin, a biphenyl aralkyl-type phenol resin, and the like; bisphenol-type epoxy resins such as a bisphenol A-type epoxy resin, a bisphenol F-type epoxy resin, a tetramethyl bisphenol F-type epoxy resin, a bisphenol S-type epoxy resin, a bisphenol E-type epoxy resin, a bisphenol M-type epoxy resin, a bisphenol P-type epoxy resin, and a bisphenol Z-type epoxy resin; novolac-type epoxy resins such as a phenol novolac-type epoxy resin and a cresol novolac-type epoxy resin; biphenyl-type epoxy resins, biphenyl aralkyl-type epoxy resins, arylalkylene-type epoxy resins, naphthalene-type epoxy resins, anthracene-type epoxy resins, phenoxy-type epoxy resins, dicyclopentadiene-type epoxy resins, norbornene-type epoxy resins, adamantane-type epoxy resins, fluorene-type epoxy resins, and trisphenylmethane-type epoxy resins.

The epoxy resin can include a polyfunctional epoxy resin having two or more epoxy groups in a molecule. Preferred examples of the epoxy resin include a trisphenylmethane-type epoxy resin, a dicyclopentadiene-type epoxy resin, a bisphenol A-type epoxy resin, a bisphenol F-type epoxy resin, and a tetramethyl bisphenol F-type epoxy resin. By using one or two or more of these, it is easy to obtain a resin composition having high heat resistance and suitable for transfer molding.

In particular, it is preferable that the epoxy resin includes an epoxy resin (trisphenylmethane-type epoxy resin) having a structural unit represented by General Formula (a1) and/or an epoxy resin (bisphenol A-type epoxy resin or bisphenol F-type epoxy resin) having a structural unit represented by General Formula (a2). In particular, by using these two types of epoxy resins in combination, it is possible to increase the heat resistance of the molded article while obtaining appropriate fluidity during molding. In a case where these two types of epoxy resins are used in combination, a combined use ratio (mass ratio) is, for example, 10/90 to 90/10, preferably 20/80 to 80/20.

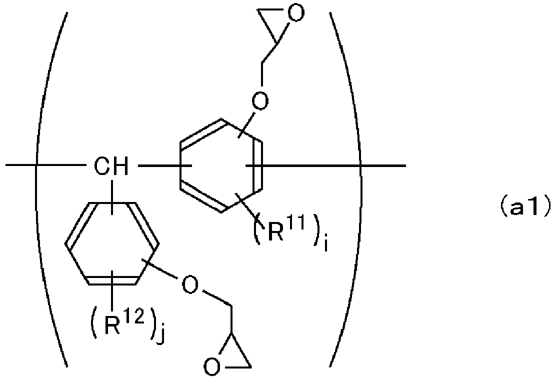

In General Formula (a1),
in a case of a plurality of R¹¹'s, the plurality of R¹¹'s each independently represent a monovalent substituent,
in a case of a plurality of R¹²'s, the plurality of R¹²'s each independently represent a monovalent substituent,
i represents an integer of 0 to 3, and
j represents an integer of 0 to 4.

Examples of the monovalent substituent in R¹¹ and R¹² include a monovalent organic group, a halogen atom, a hydroxy group, and a cyano group.

Examples of the monovalent organic group include an alkyl group, an alkenyl group, an alkynyl group, an alkylidene group, an aryl group, an aralkyl group, an alkaryl group, a cycloalkyl group, an alkoxy group, a heterocyclic group, and a carboxyl group. The number of carbon atoms in the monovalent organic group is, for example, 1 to 30, preferably 1 to 20, more preferably 1 to 10, and still more preferably 1 to 6.

Examples of the alkyl group include a methyl group, an ethyl group, an n-propyl group, an isopropyl group, an n-butyl group, an isobutyl group, a sec-butyl group, a tert-butyl group, a pentyl group, a neopentyl group, a hexyl group, a heptyl group, an octyl group, a nonyl group, and a decyl group.

Examples of the alkenyl group include an allyl group, a pentenyl group, and a vinyl group.

Examples of the alkynyl group include an ethynyl group.

Examples of the alkylidene group include a methylidene group and an ethylidene group.

Examples of the aryl group include a tolyl group, a xylyl group, a phenyl group, a naphthyl group, and an anthracenyl group.

Examples of the aralkyl group include a benzyl group and a phenethyl group.

Examples of the alkaryl group include a tolyl group and a xylyl group.

Examples of the cycloalkyl group include an adamantyl group, a cyclopentyl group, a cyclohexyl group, and a cyclooctyl group.

Examples of the alkoxy group include a methoxy group, an ethoxy group, an n-propoxy group, an isopropoxy group, an n-butoxy group, an s-butoxy group, an isobutoxy group, a t-butoxy group, an n-pentyloxy group, a neopentyloxy group, and an n-hexyloxy group.

Examples of the heterocyclic group include an epoxy group and an oxetanyl group.

i and j are each independently preferably 0 to 2 and more preferably 0 or 1.

In one aspect, both i and j are 0. That is, as the one aspect, all benzene rings in General Formula (a1) do not have a substituent other than the specified glycidyloxy group as a monovalent substituent.

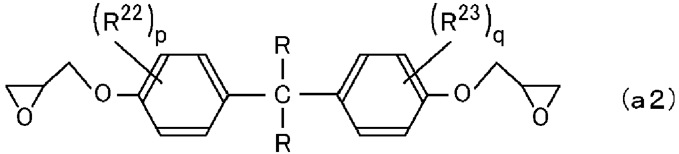

In General Formula (a2),
two R' s each independently represent a hydrogen atom or a methyl group,
in a case of a plurality of R²²'s, the plurality of R²²'s each independently represent a monovalent substituent,
in a case of a plurality of R²³'s, the plurality of R²³'s each independently represent a monovalent substituent, and
p and q each independently represent an integer of 0 to 4.

Specific examples of the monovalent substituent of R²² and R²³ in General Formula (a2) include the same as those described as the monovalent substituent of R¹¹ and R¹² in General Formula (a1). Here, as the monovalent substituent of R²² and R²³, an alkyl group is preferable, a linear or branched alkyl group having 1 to 6 carbon atoms is more preferable, and a methyl group is particularly preferable.

p and q in General Formula (a2) are each independently preferably 0 to 3 and more preferably 0 to 2. From the viewpoint of appropriate fluidity during melting, and the like, in a case where two R's are methyl groups, p and q are preferably 0, and in a case where two R's are hydrogen atoms, p and q are preferably 1 or 2.

In addition, it is also preferable that the resin (A) includes an epoxy resin including a biphenyl structure.

An epoxy resin including a biphenyl structure is specifically an epoxy resin including a structure in which two benzene rings are linked by a single bond. The benzene ring here may or may not have a substituent.

Specifically, the epoxy resin including a biphenyl structure has a partial structure represented by General Formula (BP).

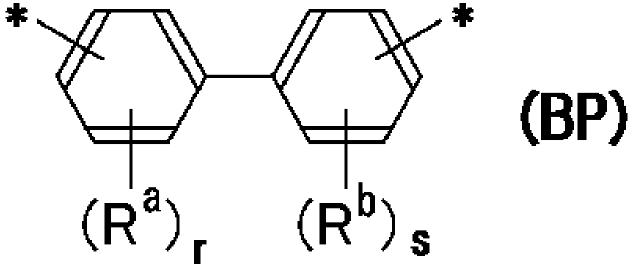

In General Formula (BP),
in a case of a plurality of R^{a}'s or R^{b}'s, the plurality of R^{a}'s or R^{b,} s are each independently a monovalent organic group, a hydroxyl group, or a halogen atom,
r and s are each independently 0 to 4, and
* represents that it is linked to another atomic group.

Specific examples of the monovalent organic group of R^{a} and R^{b} include an alkyl group, an alkenyl group, an alkynyl group, an alkylidene group, an aryl group, an aralkyl group, an alkaryl group, a cycloalkyl group, an alkoxy group, a heterocyclic group, and a carboxyl group.

Examples of the alkyl group include a methyl group, an ethyl group, an n-propyl group, an isopropyl group, an n-butyl group, an isobutyl group, a sec-butyl group, a tert-butyl group, a pentyl group, a neopentyl group, a hexyl group, a heptyl group, an octyl group, a nonyl group, and a decyl group.

Examples of the alkenyl group include an allyl group, a pentenyl group, and a vinyl group.

Examples of the alkynyl group include an ethynyl group.

Examples of the alkylidene group include a methylidene group and an ethylidene group.

Examples of the aryl group include a tolyl group, a xylyl group, a phenyl group, a naphthyl group, and an anthracenyl group.

Examples of the aralkyl group include a benzyl group and a phenethyl group.

Examples of the alkaryl group include a tolyl group and a xylyl group.

Examples of the cycloalkyl group include an adamantyl group, a cyclopentyl group, a cyclohexyl group, and a cyclooctyl group.

Examples of the alkoxy group include a methoxy group, an ethoxy group, an n-propoxy group, an isopropoxy group, an n-butoxy group, an s-butoxy group, an isobutoxy group, a t-butoxy group, an n-pentyloxy group, a neopentyloxy group, and an n-hexyloxy group.

Examples of the heterocyclic group include an epoxy group and an oxetanyl group.

The total number of carbon atoms in the monovalent organic group of R^{a} and R^{b} is, for example, 1 to 30, preferably 1 to 20, more preferably 1 to 10, and particularly preferably 1 to 6.

r and s are each independently preferably 0 to 2 and more preferably 0 or 1. In one aspect, both r and s are 0.

More specifically, the epoxy resin including a biphenyl structure has a structural unit represented by General Formula (BP1) .

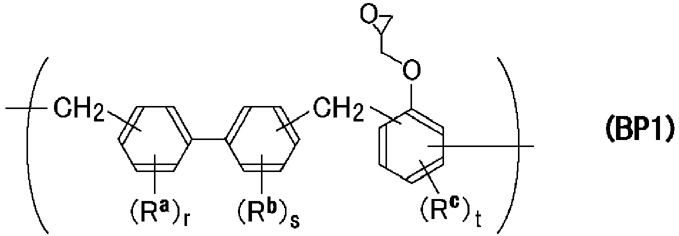

In General Formula (BP1),
definitions and specific aspects of R^{a} and R^{b} are the same as those of General Formula (BP),
definitions and preferred ranges of r and s are the same as those of General Formula (BP),
in a case of a plurality of R^{c}'s, the plurality of R^{c}'s are each independently a monovalent organic group, a hydroxyl group, or a halogen atom, and
t is an integer of 0 to 3.

Specific examples of the monovalent organic group of R^{c} include the same monovalent organic group as those mentioned as specific examples of R^{a} and R^{b}.

t is preferably 0 to 2 and more preferably 0 or 1.

The resin composition according to the present embodiment may include only one type of the resin (A), or may include two or more types of the resin (A).

A content of the resin (A) in the resin composition according to the present embodiment is, for example, 0.5% to 20% by mass, preferably 1% to 15% by mass based on the entire resin composition (100% by mass). By setting such a numerical range, it is possible to further improve moldability and mechanical properties. In addition, since the amount of the resin (A) is not too large, it is easy to increase amounts of the magnetic powder (B) and the like. That is, it is easy to improve the magnetic characteristics.

### (Magnetic powder (B))

The resin composition according to the present embodiment includes a magnetic powder (B) having a median diameter of 7.5 to 100 µm.

As the magnetic powder (B), any one can be used as long as it has the above-described median diameter and a molded article produced by using the resin composition according to the present embodiment exhibits magnetism.

The magnetic powder (B) preferably includes one or two or more elements selected from the group consisting of Fe, Cr, Co, Ni, Ag, and Mn. By selecting any of these, the magnetic characteristics can be further enhanced. By using, as the magnetic powder (B), those (iron-based particles) preferably including equal to or more than 85% by mass of Fe and more preferably including equal to or more than 90% by mass of Fe, the magnetic characteristics can be further enhanced.

The magnetic powder (B) may be a crystalline material, an amorphous material, or a mixed material thereof. In addition, as the magnetic powder (B), those having one kind of chemical composition may be used, or two or more kinds having different chemical compositions may be used in combination.

In particular, the magnetic powder (B) preferably includes iron-based particles. The iron-based particles refer to particles including an iron atom as a main component (content mass of the iron atom is the largest in the chemical composition), and more specifically, refer to an iron alloy having the largest content mass of the iron atom in the chemical composition.

More specifically, as the iron-based particles, particles (soft magnetic iron-high-content particles) exhibiting soft magnetism and having an iron atom content of equal to or more than 85% by mass can be used. Incidentally, the soft magnetism refers to ferromagnetism having a small coercive force, and generally, ferromagnetism having a coercive force of equal to or less than 800 A/m is referred to as soft magnetism. A content of the iron atom is more preferably equal to or more than 90% by mass.

Examples of a constituent material of the magnetic powder (B) include a metal-containing material having an iron content of preferably equal to or more than 85% by mass (more preferably equal to or more than 90% by mass) as a constituent element. Such a metal material having a high iron content as a constituent element exhibits soft magnetism in which magnetic characteristics such as magnetic permeability and magnetic flux density are relatively good. Therefore, a resin composition capable of exhibiting good magnetic characteristics in a case of being molded can be obtained.

However, a high iron content in the magnetic powder (B) (and the particles (C) described later) may be disadvantageous from the viewpoint of performance of "iron loss". The use of the magnetic powder (B) (and/or the particles (C)) having a high iron content as described above is mainly performed from the viewpoint of improving the saturation magnetic flux density. In a case where other performances such as iron loss are valued, it may be preferable that the iron content in the magnetic powder (B) and the particles (C) is not high.

Examples of a form of the metal-containing material include simple substances, solid solutions, eutectic crystals, and alloys such as an intermetallic compound. By using the particles composed of such a metal material, it is possible to obtain a resin composition having excellent magnetic characteristics derived from iron, that is, magnetic characteristics such as high magnetic permeability and high magnetic flux density.

In addition, the above-described metal-containing material may contain an element other than iron as a constituent element. Examples of the element other than iron include B, C, N, O, Al, Si, P, S, Ti, V, Cr, Mn, Co, Ni, Cu, Zn, Y, Zr, Nb, Mo, Cd, In, and Sn, and one kind of these may be used or two or more kinds of these may be used in combination.

Specific examples of the above-described metal-containing material include pure iron, silicon steel, iron-cobalt alloy, iron-nickel alloy, iron-chromium alloy, iron-aluminum alloy, carbonyl iron, stainless steel, and a composite material containing one or two or more of these. From the viewpoint of availability, carbonyl iron can be preferably used.

In the above, the magnetic powder (B) has been mainly described as the iron-based particles, but certainly, the magnetic powder (B) may be other particles. For example, the magnetic powder (B) may include Ni-based soft magnetic particles, Co-based soft magnetic particles, or the like.

The magnetic powder (B) may be surface-treated. For example, the surface may be treated with a coupling agent or treated with plasma. By such a surface treatment, it is possible to bond a functional group to the surface. The functional group can cover a part or all of the surface.

Examples of the functional group include a functional group represented by General Formula (1).

*-O-X-R ··· (1)

[in the formula, R represents an organic group, X is Si, Ti, Al, or Zr, and * is one of atoms constituting the magnetic powder (B)]

The above-described functional group is, for example, a residue formed by surface treatment with a known coupling agent such as a silane-based coupling agent, a titanium-based coupling agent, an aluminum-based coupling agent, and a zirconium-based coupling agent. It is preferably a residue of a coupling agent selected from the group consisting of a silane-based coupling agent and a titanium-based coupling agent. As a result, in a case where the magnetic powder (B) is blended with the resin composition to obtain a resin composition, fluidity thereof can be further enhanced.

In a case where the surface is treated with a coupling agent, examples thereof include a method of immersing the magnetic powder (B) in a diluted solution of the coupling agent and a method of directly spraying the coupling agent to the magnetic powder (B).

The amount of the coupling agent used is, for example, preferably 0.05 to 1 part by mass and more preferably 0.1 to 0.5 parts by mass with respect to 100 parts by mass of the magnetic powder (B).

Examples of a solvent for reacting the coupling agent with the magnetic powder (B) include methanol, ethanol, and isopropyl alcohol. In addition, the amount of the coupling agent used in this case is preferably 0.1 to 2 parts by mass and more preferably 0.5 to 1.5 parts by mass with respect to 100 parts by mass of the solvent.

The reaction time (for example, immersion time in the diluted solution) between the coupling agent and the magnetic powder (B) is preferably 1 to 24 hours.

In a case where the functional group as described above is bonded, plasma treatment may be performed in advance as a part of the surface treatment on the magnetic powder (B). For example, by performing oxygen plasma treatment, OH groups are generated on the surface of the magnetic powder (B), and a bonding between the magnetic powder (B) and the residue of the coupling agent through oxygen atoms is easy. As a result, the functional group can be bonded more firmly.

The above-described plasma treatment is preferably oxygen plasma treatment. As a result, the OH group can be efficiently modified on the surface of the magnetic powder (B).

The pressure of the oxygen plasma treatment is preferably 100 to 200 Pa and more preferably 120 to 180 Pa.

The flow rate of processing gas in the oxygen plasma treatment is preferably 1000 to 5000 mL/min and more preferably 2000 to 4000 mL/min.

The output of the oxygen plasma treatment is preferably 100 to 500 W and more preferably 200 to 400 W.

The treatment time of the oxygen plasma treatment is appropriately set according to the above-described various conditions, but is preferably 5 to 60 minutes and more preferably 10 to 40 minutes.

Argon plasma treatment may be further performed before the oxygen plasma treatment is performed. As a result, an active site for modifying the OH group can be formed on the surface of the magnetic powder (B), so that the modification of the OH group can be performed more efficiently.

The pressure of the argon plasma treatment is preferably 10 to 100 Pa and more preferably 15 to 80 Pa.

The flow rate of processing gas in the argon plasma treatment is preferably 10 to 100 mL/min and more preferably 20 to 80 mL/min.

The output of the argon plasma treatment is preferably 100 to 500 W and more preferably 200 to 400 W.

The treatment time of the argon plasma treatment is preferably 5 to 60 minutes and more preferably 10 to 40 minutes.

Incidentally, the fact that the residue of the coupling agent is bonded to the surface of the magnetic powder (B) through an oxygen atom can be confirmed by, for example, a Fourier transform infrared spectrophotometer.

The above-described surface treatment may be applied to all magnetic powders (B) or some of the magnetic powders (B).

As already described, the median diameter of the magnetic powder (B) is 7.5 to 100 µm. The median diameter is preferably 8 to 90 µm and more preferably 10 to 80 µm.

The median diameter can be obtained as a volume-based value by measuring the particles in a dry manner using a laser diffraction/scattering type particle diameter distribution measuring device.

As the magnetic powder (B), two different types of magnetic powder may be used in combination. For example, the resin composition according to the present embodiment may include two different magnetic powders (B) having different median diameters within the range of 7.5 to 100 µm. As a result, since a "gap" between the magnetic powders (B) is reduced and density of the magnetic powder can be increased, the magnetic characteristics can be improved.

It is preferable that, as the magnetic powder (B), a magnetic powder having a median diameter of 7.5 to 15 µm and a magnetic powder having a median diameter of 20 to 100 µm (more preferably 35 to 90 µm) are used in combination.

The magnetic powder (B) preferably has a shape close to a perfect circle (true sphere). It is considered that this reduces friction between the particles and further enhances the fluidity.

Specifically, "circularity" defined below is determined for any 10 or more (preferably 50 or more) magnetic powders (B), and an average circularity obtained by averaging the values is preferably equal to or more than 0.60 and more preferably equal to or more than 0.75.

Definition of circularity: when a contour of the magnetic powder is observed with a scanning electron microscope, in a case where an isoarea equivalent circle diameter obtained from the contour is defined as Req and a radius of a circle circumscribing the contour is defined as Rc, a value of Req/Rc

A content ratio of the magnetic powder (B) in the resin composition according to the present embodiment is preferably equal to or more than 50% by mass, more preferably 50% to 99% by mass, and still more preferably 60% to 99% by mass. In a case where the content ratio is equal to or more than 90% by mass, it is easy to obtain a molded article (magnetic component) having excellent magnetic characteristics. On the other hand, in a case where the content ratio is equal to or less than 99% by mass, a sufficient amount of other components such as the resin can be used, and moldability, mechanical strength, and the like can be further improved.

### (Particles (C))

The resin composition according to the present embodiment includes particles (C) having a median diameter of 0.2 to 5 µm.

As an example, the particles (C) include a magnetic powder. In a case where the particles (C) include the magnetic powder, concentration and density of magnetic substance in the resin composition can be further increased together with the magnetic powder (B). The magnetic characteristics (saturation magnetic flux density and the like) of the final molded article can be further improved.

As another example, the particles (C) include a non-magnetic powder. By intentionally using the non-magnetic powder different from the magnetic powder as the particles (C) to be combined with the magnetic powder (B), it is considered that the precipitation of the magnetic powder (B) during melting of the resin composition is further suppressed, and the fluidity is further improved.

The particles (C) may include both magnetic powder and non-magnetic powder, or may include only one of them.

In a case where the particles (C) include the magnetic powder, constituent elements and the like of the magnetic powder can be the same as those described in the magnetic powder (B) above. In other words, the particles (C) can be the same as the magnetic powder (B), except that the median diameter is 0.2 to 5 µm. As described in the section of the magnetic powder (B), mainly from the viewpoint of improving the saturation magnetic flux density, it is preferable that the iron content in the particles (C) is high. Specifically, the particles (C) preferably include a magnetic powder having a content of Fe atoms of equal to or more than 85% by mass, and more preferably include a magnetic powder having a content of Fe atoms of equal to or more than 90% by mass. On the other hand, in a case where other performances such as iron loss are valued, it may be preferable that the iron content in the particles (C) is not large.

In a case where the particles (C) include the non-magnetic powder, examples of the non-magnetic powder include inorganic materials such as a ceramic material and a glass material. Examples of the inorganic material include oxide-based materials such as silica, alumina, zirconia, titania, magnesia, and calcia, nitride-based materials such as silicon nitride and aluminum nitride, and carbide-based materials such as silicon carbide and boron carbide. One of these may be used alone, or two or more thereof may be used in combination.

The non-magnetic powder preferably includes silica particles. Although details are not clear, it is presumed that a small specific gravity of the silica particles (usually 1.5 to 3, preferably 2 to 2.5) is related to the suppression of precipitation of the magnetic powder (B) (specific gravity: usually 6 to 9, preferably 7 to 8) during melting of the resin composition.

In addition, affinity of the silica particles with the resin is relatively good. This is preferable in terms of fluidity during molding. Furthermore, insulating property of the silica particles is relatively good. This is preferable in a case of forming the magnetic component using the resin composition according to the present embodiment.

A true specific gravity of the constituent material of the non-magnetic powder is preferably 1.0 to 6.0, more preferably 1.2 to 5.0, and still more preferably 1.5 to 4.5. Since such non-magnetic powder has a small specific gravity, the non-magnetic powder easily flows together with a molten product of the thermosetting resin. Therefore, in a case where the molten product flows toward gaps of a molding mold during molding, the non-magnetic powder easily flows together with the molten product. As a result, the gap is closed by the non-magnetic powder, and exudation of the molten product can be suppressed more reliably. The gap in the molding mold includes, for example, a gap (clearance) between a plunger and a cylinder of a transfer molding machine.

The median diameter of the particles (C) is not particularly limited as long as it is 0.2 to 5 µm, but is preferably 0.3 to 4 µm and more preferably 0.4 to 3 µm. By adjusting the median diameter of the particles (C), it is possible to further improve the fluidity during molding and the magnetic performance of the molded product.

A method for measuring the median diameter of the particles (C) is the same as that for the magnetic powder (B).

A circularity of the particles (C) is not particularly limited, but is preferably 0.50 to 1.00 and more preferably 0.75 to 1.00. In a case where the circularity of the particles (C) is within the above-described range, it is easy to increase the fluidity of the resin composition by utilizing rolling of the particles (C) itself. The definition of circularity is as described for the magnetic powder (B) .

The resin composition according to the present embodiment may include only one type of the particles (C), or may include two or more types of the particles (C).

A content ratio of the particles (C) in the resin composition according to the present embodiment is preferably 1% to 20% by mass and more preferably 1% to 18% by mass.

In a case where only the magnetic powder is used as the particles (C), the content ratio of the particles (C) is preferably 10% to 20% by mass and more preferably 12% to 18% by mass. As a result, the magnetic characteristics can be further enhanced.

In a case where only the non-magnetic powder is used as the particles (C), the content ratio of the particles (C) is preferably 1% to 5% by mass and more preferably 1% to 4% by mass. By using an appropriate amount of the non-magnetic powder, it is easy to balance the fluidity and magnetic characteristics during molding.

### (Ratio, total amount, and the like of magnetic powder (B) and particles (C))

By appropriately adjusting a ratio of the magnetic powder (B) and the particles (C), various performances can be further improved. For example, in the resin composition, a value of the amount of the particles (C)/(the amount of the magnetic powder (B) + the amount of the particles (C)) is preferably 0.01 to 0.3 and more preferably 0.01 to 0.2. In a case where the value is appropriate, the fluidity during transfer molding can be further increased.

As another viewpoint, by appropriately adjusting a volume ratio of particle components (the magnetic powder (B) and the particles (C)) in the resin composition, it is possible to improve the magnetic performance of the molded article while obtaining good moldability. Specifically, the ratio of the particle components in the resin composition according to the present embodiment is preferably 70% to 80% by volume and more preferably 75% to 80% by volume.

From another viewpoint, by appropriately adjusting a volume ratio of particle components related to the magnetic characteristics (the magnetic powder (B) and magnetic powder classified into the particles (C)) in the resin composition, it is possible to improve the magnetic performance of the molded article while obtaining good moldability. Specifically, the ratio of the particle components related to the magnetic characteristics in the resin composition according to the present embodiment is preferably 70% to 80% by volume and more preferably 75% to 80% by volume.

### (Curing agent (D))

The resin composition according to the present embodiment preferably includes a curing agent (D). The curing agent (D) is not particularly limited as long as it can react with the resin (A) to cure the resin. By using the curing agent (D), it is possible to obtain a resin composition which is cured in an appropriate heating time. In addition, by using the curing agent (D), the mechanical strength of the molded article can be further increased.

For example, in a case where the resin (A) includes the epoxy resin, as the curing agent (D), it is preferable to use polyamine compounds such as an aliphatic polyamine, an aromatic polyamine, an aromatic diamine, and a dicyamine diamide, acid anhydrides such as an alicyclic acid anhydride and an aromatic acid anhydride, polyphenol compounds (phenol-based curing agents) such as a novolac-type phenol resin, and imidazole compounds.

For example, in a case where the resin (A) includes phenol resins such as a novolac-type phenol resin, as the curing agent, it is preferable to use hexamethylenetetramine.

For example, in a case where the resin (A) includes a maleimide resin, as the curing agent, it is preferable to use an imidazole compound.

In the present embodiment, the curing agent (D) preferably includes at least one selected from the group consisting of a phenol compound and an amine compound. By using any of these, the heat resistance of the molded article (magnetic member) can be enhanced.

The phenol compound is not particularly limited as long as it includes a phenolic hydroxy group and can react with the thermosetting resin such as an epoxy resin. The phenol compound may be a low molecular weight substance or a polymer. The phenol-based curing agent preferably includes a novolac resin. In a case where the phenol-based curing agent includes a novolac resin, the heat resistance of the molded article (magnetic member) can be particularly enhanced.

In addition, it is also preferable to use a phenol resin including a biphenyl structure as the phenol-based curing agent. Specifically, the biphenyl structure is the partial structure represented by General Formula (BP) in the description of the epoxy resin. Specific examples of the phenol resin including a biphenyl structure include those in which the glycidyl group portion is a hydrogen atom in General Formula (BP1) in the description of the epoxy resin. Specific examples of the phenol resin including a biphenyl structure include MHE-7851SS (manufactured by MEIWA PLASTIC INDUSTRIES, LTD.) used in Examples described later.

Examples of the amine compound include the above-described polyamine compounds. As an example, an aromatic diamine is preferable. That is, a compound having one or more aromatic ring structures and two amino groups (-NH₂) in one molecule is preferable.

In a case where the curing agent (D) is a polymer or an oligomer, a number average molecular weight (standard polystyrene-equivalent value measured by GPC) of the curing agent (D) is not particularly limited, but is, for example, approximately 200 to 800.

In a case where the resin composition according to the present embodiment includes the curing agent (D), one type of the curing agent (D) may be included, or two or more types thereof may be included.

In a case where the resin composition according to the present embodiment includes the curing agent (D), a content of the curing agent (D) is, for example, 0.5% to 10% by mass, preferably 1% to 5% by mass based on the entire resin composition (100% by mass). In a case of using the curing agent (D), by appropriately adjusting the amount of the curing agent (D), the moldability can be further improved, and mechanical properties or magnetic characteristics of the obtained cured product (magnetic member) can be improved.

### (Mold release agent (E))

The resin composition according to the present embodiment preferably includes a mold release agent (E). As a result, releasability of the resin composition during molding can be improved.

Examples of the mold release agent (E) include natural waxes such as carnauba wax, synthetic waxes such as montanic acid ester wax and polyethylene oxide wax, higher fatty acids such as zinc stearate and metal salts thereof, and paraffin.

In a case where the mold release agent (E) is used, only one type may be used, or two or more types may be used in combination.

In a case where the mold release agent (E) is used, an amount thereof is, for example, 0.01% to 3% by mass, preferably 0.05% to 2% by mass based on the entire resin composition (100% by mass) . By using an appropriate amount of the mold release agent, it is possible to improve releasability during molding while maintaining other performances.

### (Curing accelerator (F))

The resin composition according to the present embodiment preferably includes a curing accelerator (F). As a result, curability of the resin composition can be improved.

As the curing accelerator (F), any one can be used as long as it accelerates curing reaction of the resin such as an epoxy resin. For example, a known epoxy curing catalyst can be used.

Specific examples thereof include phosphorus atom-containing compounds such as organic phosphine, a tetra-substituted phosphonium compound, a phosphobetaine compound, an adduct of phosphine compound and quinone compound, and an adduct of phosphonium compound and silane compound; imidazoles (imidazole-based curing accelerator) such as 2-methylimidazole; and nitrogen atom-containing compounds such as amidines and tertiary amines, for example, 1,8-diazabicyclo[5.4.0]undecene-7 and benzyldimethylamine, and quaternary salts of amidine or amine.

In a case where the curing accelerator (F) is used, only one type may be used, or two or more types may be used.

In a case where the curing accelerator (F) is used, a content thereof is preferably 0.01% to 1% by mass and more preferably 0.05% to 0.8% by mass with respect to the entire resin composition. By setting such a numerical range, the effect of improving the curability can be sufficiently obtained while maintaining other performances.

### (Other components)

The resin composition according to the present embodiment may include a component other than the above-described components. For example, the resin composition according to the present embodiment may include one or two or more of a low stress agent, a coupling agent, an adhesion aid, a coloring agent, an antioxidant, an anticorrosion agent, a dye, a pigment, a flame retardant, a mold release agent (wax), non-magnetic particles (for example, silica), and the like.

In addition, unless there are excessive disadvantages, the resin composition according to the present embodiment may include particles or particulate matters which do not correspond to the above-described (B) and (C). Certainly, the resin composition according to the present embodiment may include only the above-described (B) and (C) as particles or particulate matters. As a result, it is possible to further improve the magnetic performance, the fluidity, and the like.

Examples of the low stress agent include silicone compounds such as a polybutadiene compound, an acrylonitrile butadiene copolymer compound, a silicone oil, and a silicone rubber. In a case where a low stress agent is used, only one type may be used, or two or more types may be used in combination.

As the coupling agent, the coupling agent described above in the description of surface modification of specific magnetic particles can be used. Examples thereof include a silane-based coupling agent, a titanium-based coupling agent, a zirconia-based coupling agent, and an aluminum-based coupling agent. In a case where a coupling agent is used, only one type may be used, or two or more types may be used in combination.

In a case where the resin composition according to the present embodiment includes other components, an amount thereof is appropriately adjusted in a range of, for example, 0.001% to 10% by mass based on the entire resin composition (100% by mass).

### (Properties of resin composition, manufacturing method, and the like)

The resin composition according to the present embodiment may be solid at room temperature (25°C).

Properties of the resin composition according to the present embodiment can be powdery, granular, tablet, or the like.

The resin composition according to the present embodiment can be produced by, for example, (1) mixing each component using a mixer, (2) kneading the mixture at approximately 120°C for approximately 5 minutes using a roll to obtain a kneaded product, and (3) cooling and then pulverizing the obtained kneaded product. From the above, a powdery resin composition can be obtained.

As necessary, the powdery resin composition may be tableted into granules or tablets. As a result, a resin composition suitable for melt molding such as transfer molding can be obtained. In addition, by solidifying the resin composition at room temperature (25°C), it is possible to further improve transportability and storability.

### <Molded article and manufacturing method of molded article>

The resin composition according to the present embodiment is molded into a desired shape by a melt molding method such as a transfer molding method, an injection molding method, and an extrusion molding method.

Among these methods, the resin composition according to the present embodiment is suitable for molding by a transfer molding method. That is, a molded article (magnetic member) can be obtained by injecting a molten product of the above-described resin composition into a mold using a transfer molding apparatus, and curing the molten product. The molded article can be suitably used, for example, as a magnetic member in an electric/electronic device. More specifically, the molded product is preferably used as a magnetic core of a coil (also called a reactor or an inductor depending on the application or purpose).

The transfer molding can be performed by appropriately using a known transfer molding apparatus. Specifically, first, a preheated resin composition is placed in a heating chamber, which is also called a transfer chamber, and melted to obtain a molten product. Thereafter, the molten product is poured into a mold with a plunger and held as it is to cure the molten product. As a result, a desired molded product can be obtained.

In terms of controllability of dimensions of the molded article, improvement of degree of freedom in shape, and the like, the transfer molding is preferable as compared with other molding methods.

Various conditions in the transfer molding can be set optionally. For example, the preheating temperature can be appropriately adjusted to 60°C to 100°C, the heating temperature for melting can be appropriately adjusted to 150°C to 250°C, the mold temperature can be appropriately adjusted to 150°C to 200°C, and the pressure at which the molten product of the resin composition is injected into the mold can be appropriately adjusted between 1 to 20 MPa.

### <Magnetic member (molded article) and coil>

As described above, the molded article (cured product of the resin composition) obtained by using the resin composition according to the present embodiment can be suitably used as a magnetic member. As described above, the resin composition according to the present embodiment is preferably used for manufacturing a small and lightweight magnetic component.

Hereinafter, an aspect of a coil in which the molded article (magnetic member) obtained by using the resin composition according to the present embodiment is provided as a magnetic core and/or an exterior member will be described.

### (First aspect)

Figs. 1A and 1B are diagrams schematically showing a coil 100 (reactor) including a magnetic core composed of the molded article of the resin composition according to the present embodiment.

Fig. 1A shows an outline of the coil 100 as viewed from above. Fig. 1B shows a cross-sectional view taken along a line A-A' in Fig. 1A.

As shown in Figs. 1A and 1B, the coil 100 can include a winding 10 and a magnetic core 20. The magnetic core 20 is filled inside the winding 10 which is an air-core coil. The pair of windings 10 shown in Fig. 1A are connected in parallel. In this case, the annular magnetic core 20 has a structure which penetrates an inside of the pair of windings 10 shown in Fig. 1B. The magnetic core 20 and the winding 10 can have an integrated structure.

From the viewpoint of ensuring insulation of these, the coil 100 may have a structure in which an insulator (not shown) is interposed between the winding 10 and the magnetic core 20.

In the coil 100, the winding 10 and the magnetic core 20 may be sealed by an exterior member 30 (sealing member). For example, the winding 10 and the magnetic core 20 are housed in a housing (case), a liquid resin is introduced therein, and the liquid resin is cured as necessary, so that the exterior member 30 may be formed around the winding 10 and the magnetic core 20. In this case, the winding 10 may have a drawing portion (not shown) in which an end portion of the winding is pulled out to an outside of the exterior member 30.

The winding 10 is usually formed by winding a winding having an insulating coating on the surface of a metal wire. The metal wire preferably has high conductivity, and copper and copper alloys can be preferably used. In addition, as the insulating coating, a coating such as enamel can be used. Examples of a cross-sectional shape of the winding include a circular shape, a rectangular shape, and a hexagonal shape.

On the other hand, a cross-sectional shape of the magnetic core 20 is not particularly limited, but for example, in cross-sectional view, the cross-sectional shape may be a circular shape or a polygonal shape such as a quadrangle or a hexagon. Since the magnetic core 20 is composed of, for example, a melt-molded article of the resin composition according to the present embodiment, it is possible to have a desired shape.

According to the cured product of the resin composition according to the present embodiment, the magnetic core 20 having excellent moldability and magnetic characteristics can be realized. That is, the coil 100 provided with the magnetic core 20 is expected to have good mass production suitability and a small iron loss. In addition, since the magnetic core 20 having excellent mechanical properties can be realized, it is possible to improve durability, reliability, and manufacturing stability of the coil 100. Therefore, the coil 100 can be used as a reactor for a booster circuit or a large current.

### (Second aspect)

As an aspect different from the above-described coil, an outline of a coil (inductor) including an exterior member composed of the molded article of the resin composition according to the present embodiment will be described with reference to Figs. 2A and 2B.

Fig. 2A shows an outline of a coil 100B as viewed from above. Fig. 2B shows a cross-sectional view taken along a line B-B' in Fig. 2A.

As shown in Figs. 2A and 2B, the coil 100B can include a winding 10B and a magnetic core 20B. The magnetic core 20B is filled inside the winding 10B which is an air-core coil. The pair of windings 10B shown in Fig. 2A are connected in parallel. In this case, the annular magnetic core 20B has a structure which penetrates an inside of the pair of windings 10B shown in Fig. 2B. These magnetic cores 20B and windings 10B can be individually produced, and have a combined structure in combination.

From the viewpoint of ensuring insulation of these, the coil 100B may have a structure in which an insulator (not shown) is interposed between the winding 10B and the magnetic core 20B.

In the coil 100B, the winding 10B and the magnetic core 20B are sealed by an exterior member 30B (sealing member) . For example, by placing the magnetic core 20B filled in the winding 10B in a mold, and performing transfer molding using the resin composition according to the present embodiment, the resin composition can be cured to form the exterior member 30B around the winding 10B and the magnetic core 20B. In this case, the winding 10B may have a drawing portion (not shown) in which an end portion of the winding is pulled out to an outside of the exterior member 30B.

The winding 10B is usually formed by winding a conducting wire having an insulating coating on the surface of a metal wire. The metal wire preferably has high conductivity, and copper and copper alloys can be preferably used. In addition, as the insulating coating, a coating such as enamel can be used. Examples of a cross-sectional shape of the winding 10B include a circular shape, a rectangular shape, and a hexagonal shape.

On the other hand, a cross-sectional shape of the magnetic core 20B is not particularly limited, but for example, in cross-sectional view, the cross-sectional shape may be a circular shape or a polygonal shape such as a quadrangle or a hexagon. As the magnetic core 20B, for example, a powder iron core composed of a magnetic powder and a binder can be used.

According to the cured product of the resin composition according to the present embodiment, the exterior member 30B having excellent moldability and magnetic characteristics can be realized, so that low magnetic loss is expected in the coil 100B provided with the magnetic core 20B. In addition, since the exterior member 30B having excellent mechanical properties can be realized, it is possible to improve durability, reliability, and manufacturing stability of the coil 100B.

### (Third aspect)

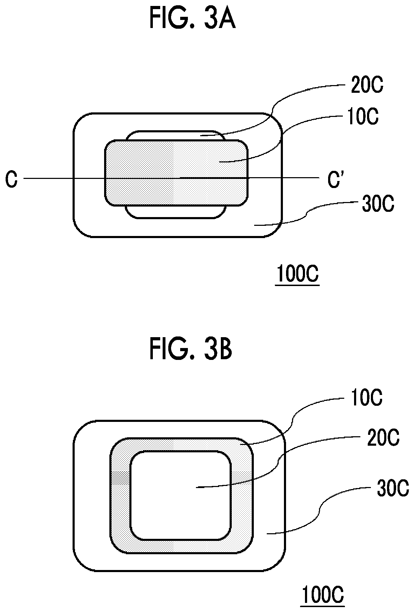

As still another aspect, an outline of an integrated inductor including a magnetic core composed of a cured product of the resin composition according to the present embodiment and an exterior member will be described with reference to Figs. 3A and 3B.

Fig. 3A shows an outline of the structure viewed from the upper surface of an integrated inductor 100C. Fig. 3B shows a cross-sectional view taken along a line C-C' in Fig. 3A.

The integrated inductor 100C can include a winding 10C and a magnetic core 20C. The magnetic core 20C is filled inside the winding 10C which is an air-core coil. The winding 10C and the magnetic core 20C are sealed by an exterior member 30C (sealing member). The magnetic core 20C and the exterior member 30C can be composed of the molded article of the resin composition according to the present embodiment. The magnetic core 20C and the exterior member 30C may be formed as seamless integral members.

As a method for manufacturing the integrated inductor 100C, for example, first, the winding 10C is placed in a mold, and transfer molding is performed using the resin composition according to the present embodiment. As a result, the resin composition can be cured to integrally form the magnetic core 20C filled in the winding 10C and the exterior member 30C around these. In this case, the winding 10C may have a drawing portion (not shown) in which an end portion of the winding is pulled out to an outside of the exterior member 30C.

The winding 10C is usually formed by winding a conducting wire having an insulating coating on the surface of a metal wire. The metal wire preferably has high conductivity, and copper and copper alloys can be preferably used. In addition, as the insulating coating, a coating such as enamel can be used. Examples of a cross-sectional shape of the winding 10C include a circular shape, a rectangular shape, and a hexagonal shape.

On the other hand, a cross-sectional shape of the magnetic core 20C is not particularly limited, but for example, in cross-sectional view, the cross-sectional shape may be a circular shape or a polygonal shape such as a quadrangle or a hexagon. Since the magnetic core 20C is composed of a melt-molded article of the resin composition according to the present embodiment, it is possible to have a desired shape.

According to the cured product of the resin composition according to the present embodiment, the magnetic core 20C and the exterior member 30C having excellent moldability and magnetic characteristics can be realized. Therefore, low magnetic loss is expected in the integrated inductor 100C having these. In addition, since the exterior member 30C having excellent mechanical properties can be realized, it is possible to improve durability, reliability, and manufacturing stability of the integrated inductor 100C. Therefore, the integrated inductor 100C can be used as an inductor for a booster circuit or a large current.

The embodiments of the present invention have been described above, but these are examples of the present invention and various configurations other than the above can be adopted. In addition, the present invention is not limited to the above-described embodiments, and modifications, improvements, and the like within the range in which the object of the present invention can be achieved are included in the present invention.

### [EXAMPLES]

Embodiments of the present invention will be described in detail based on Examples and Comparative Examples. As a reminder, the present invention is not limited to Examples.

### <Preparation of resin composition>

First, each raw material component was mixed by a mixer according to raw material components and their blending ratios shown in Table 1 below. Next, the obtained mixture was rolled and kneaded to obtain a kneaded product. Thereafter, the kneaded product was cooled and pulverized to obtain a particulate resin composition.

Details of each component in Table 1 below are as follows.

A median diameter of each of the following magnetic powder and particles is determined from a volume-based particle diameter distribution curve obtained by a dry measurement using a laser diffraction/scattering type particle diameter distribution measuring device "LA-950" manufactured by HORIBA, Ltd.

### (Magnetic powder having median diameter of 7.5 to 100 µm)

DAPMS7-100: manufactured by Daido Steel Co., Ltd., proportion of Fe atoms: 93.4% by mass
DAPMS7-200: manufactured by Daido Steel Co., Ltd., proportion of Fe atoms: 93.4% by mass
KUAMET6B2 150C01: manufactured by Epson Atmix Corporation, proportion of Fe atoms: 87.6% by mass
Fe-3.5Si-4.5Cr: manufactured by Epson Atmix Corporation, proportion of Fe atoms: 91.9% by mass
DAPMSC5: manufactured by Daido Steel Co., Ltd., proportion of Fe atoms: 90.5% by mass

The median diameter and specific gravity of the above-described magnetic powders are shown in Table 1.

### (Particles having median diameter of 0.2 to 5 µm)

CIP-HQ: manufactured by BASF, proportion of Fe atoms: 99.1% by mass
Silica 1: SO-25R of Admatechs
Silica 2: SO-32R of Admatechs

The median diameter and specific gravity of each of the above-described particles are shown in Table 1.

### (Resin)

E1032H60: trisphenylmethane-type epoxy resin (manufactured by Mitsubishi Chemical Corporation, solid at room temperature of 25°C)
YL6810: bisphenol A-type epoxy resin (manufactured by Mitsubishi Chemical Corporation, solid at room temperature of 25°C)
NC-3000L: biphenyl aralkyl-type epoxy resin manufactured by Nippon Kayaku Co., Ltd., solid at 23°C, containing the structural unit represented by General Formula (BP1) described above

### (Curing agent)

PR-HF-3: novolac-type phenol resin (manufactured by Sumitomo Bakelite Co., Ltd., solid at room temperature (25°C))
MHE-7851SS: biphenyl skeleton-containing phenol aralkyl resin (manufactured by MEIWA PLASTIC INDUSTRIES, LTD., solid at 23°C)

### (Mold release agent)

WE-4: synthetic wax (manufactured by Clariant, ester wax)

### (Curing accelerator)

CUREZOL 2PZ-PW: imidazole-based curing accelerator (manufactured by SHIKOKU CHEMICALS CORPORATION)

### <Measurement of saturation magnetic flux density>

With a low-pressure transfer molding machine ("KTS-30" manufactured by KOHTAKI Corporation), the resin composition was injected into a cylindrical mold having a diameter of 16 mmΦ and a height of 32 mm under conditions of a mold temperature of 175°C, an injection pressure of 5 MPa, and a clamping pressure of 8 MPa. As a result, a cylindrical molded article having a diameter of 16 mmΦ and a height of 32 mm was obtained.

Next, the obtained molded article was post-cured at 175°C for 4 hours.

From the above, a molded article for measuring a saturation magnetic flux density was produced.

For reference, in the resin compositions of Comparative Examples 1 to 4, a molded article for the measurement could not be obtained due to insufficient fluidity or the like.

At room temperature (25°C), using a DC/AC magnetization characteristic test device (manufactured by METRON Technology Research, MTR-3368), an external magnetic field of 100 kA/m was applied to the above-described molded article. As a result, the saturation magnetic flux density at room temperature was measured.

### <Measurement of spiral flow>

With a low-pressure transfer molding machine ("KTS-15" manufactured by KOHTAKI Corporation), the resin composition was injected into a mold for measuring spiral flow according to EMMI-1-66 under conditions of a mold temperature of 175°C, an injection pressure of 6.9 MPa, and a curing time of 120 seconds, thereby measuring a flow length. As the flow length is larger, the fluidity is better.

The amount of each component in the resin composition and the above-described measurement results are summarized in the tables below.

In the tables below, the units of the amount of the magnetic powder having a median diameter of 7.5 to 100 µm, the particles having a median diameter of 0.2 to 5 µm, the resin, the curing agent, the mold release agent, and the curing accelerator are part by mass.

In the tables below, the amount (vol%) of the particle components represents the volume ratio of the particle components (it does not matter whether the component is a magnetic powder or a non-magnetic powder) in the resin composition according to the present embodiment on a volume basis.

In the tables below, the amount (vol%) of the particle components related to the magnetic characteristics represents the ratio of the particle components related to the magnetic characteristics (typically, magnetic powder) in the resin composition according to the present embodiment on a volume basis.

### [Table 1]

**[Table 1]**

| | | Median diameter | Specific gravity | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|---|
| Magnetic powder having median diameter of 7.5 to 100 µm | DAPMS7-100 | 75 µm | 7.5 | - | 75.51 | 66.32 | - | - | - | - | - | - | - | - |
| | DAFMS7-200 | 52 µm | 7.5 | 63.72 | - | - | 60.69 | 65.26 | 69.71 | 74.24 | - | - | - | - |
| | KUAMET6B2 150C01 | 50 µm | 6.9 | - | - | - | - | - | - | - | 64.25 | 64.15 | 64.25 | 64.15 |
| | Fe-3.5Si-4.5Cr | 10 µm | 7.2 | 16.01 | 18.12 | 27.29 | 31.33 | 26.78 | 22.34 | 17.82 | 16.11 | 16.08 | 16.11 | 16.08 |
| | DAPMSC5 | 10 µm | 7.7 | - | - | - | - | - | - | - | - | - | - | - |
| Particles having median diameter of 0.2 to 5 µm | CIP-HQ | 2 µm | 7.8 | 15.34 | - | - | - | - | - | - | 15.46 | 15.43 | 15.46 | 15.43 |
| | Silica 1 | 0.5 µm | 2.2 | - | 1.18 | 1.19 | 2.14 | 2.14 | 2.13 | 2.13 | - | 0.36 | - | 0.36 |
| | Silica 2 | 1.5 µm | 2.2 | - | 0.59 | 0.59 | 1.07 | 1.07 | 1.07 | 1.06 | - | - | - | - |
| Resin | E1032H60 | - | - | 1.46 | 1.37 | 1.37 | 1.42 | 1.42 | 1.41 | 1.41 | 1.93 | 1.84 | - | - |
| | YL6810 | - | - | 1.47 | 1.37 | 1.38 | 1.43 | 1.42 | 1.42 | 1.42 | 0.57 | 0.55 | - | - |
| | NC-3000L | | | - | - | - | - | - | - | - | - | - | 2.25 | 2.15 |
| Curing agent | PR-HF3 | - | - | 1.8 | 1.68 | 1.69 | 1.74 | 1.74 | 1.73 | 1.73 | 1.51 | 1.44 | - | - |
| | MHE-7851SS | - | - | - | - | - | - | - | - | - | - | - | 1.77 | 1.67 |
| Mold release agent | WE-4 | - | - | 0.1 | 0.09 | 0.09 | 0.09 | 0.09 | 0.09 | 0.09 | 0.08 | 0.07 | 0.07 | 0.07 |
| Curing accelerator | Curesol 2PZ-PW | - | - | 0.09 | 0.09 | 0.09 | 0.09 | 0.09 | 0.09 | 0.09 | 0.11 | 0.11 | 0.09 | 0.08 |
| Amount of particle components (vol%) | | | | 76 | 78.2 | 78.2 | 78.2 | 78.2 | 78.2 | 78.2 | 79 | 80 | 79 | 80 |
| Amount of particle components related to magnetic characteristics (vol%) | | | | 76 | 73.5 | 73.5 | 70 | 70 | 70 | 70 | 79 | 79 | 79 | 79 |
| Spiral flow (cm) | | | | 47 | 44 | 47 | 50 | 49 | 45 | 41 | 38 | 32 | 47 | 40 |
| Saturation magnetic flux density (T) | | | | 1.32 | 1.25 | 1.25 | 1.13 | 1.14 | 1.15 | 1.14 | 1.38 | 1.38 | 1.38 | 1.38 |

### [Table 2]

**[Table 2]**

| | | Median diameter | Specific gravity | Comparative Example 1 | Comparative Example 2 | Comparative Example 3 | Comparative Example 4 | Comparative Example e 5 | Comparative Example 6 |
|---|---|---|---|---|---|---|---|---|---|
| Magnetic powder having median diameter of 7.5 to 100 µm | DAPMS7-100 | 75 µm | 7.5 | 66.84 | - | - | - | - | - |
| | DAPMS7-200 | 52 µm | 7.5 | | 66.14 | 75.3 | 84.4 | - | - |
| | KUAMET6B2 150C01 | 50 µm | 6.9 | | | | | 65.42 | 70.99 |
| | Fe-3.5Si-4.5Cr | 10 µm | 7.2 | 27.5 | 27.21 | 18.07 | 9 | - | - |
| | DAPMSC5 | 10 µm | 7.7 | - | - | - | - | 19.06 | 20.68 |
| Particles having median diameter of 0.2 to 5 µm | CIP-HQ | 2 µm | 7.8 | - | - | - | - | 10.95 | - |
| | Silica 1 | 0.5 µm | 2.2 | - | - | - | - | - | 2.23 |
| | Silica 2 | 1.5 µm | 2.2 | - | - | - | - | - | 1.12 |
| Resin | E1032H60 | - | - | 1.68 | 1.98 | 1.97 | 1.96 | 2.74 | 2.97 |
| | YL6810 | - | - | 1.69 | 1.98 | 1.98 | 1.97 | - | - |
| | NC-3000L | | | - | - | - | - | - | - |
| Curing agent | PR-HF3 | - | - | 2.06 | 2.43 | 2.42 | 2.41 | 1.68 | 1.82 |
| | MHE-7851SS | - | - | - | - | - | - | - | - |
| Mold release agent | WE-4 | - | - | 0.11 | 0.13 | 0.13 | 0.13 | 0.09 | 0.1 |
| Curing accelerator | Curesol 2PZ-PW | - | - | 0.11 | 0.13 | 0.13 | 0.13 | 0.08 | 0.08 |
| Amount of particle components (vol%) | | | | 73.5 | 70 | 70 | 70 | 78.2 | 78.2 |
| Amount of particle components related to magnetic characteristics (vol%) | | | | | | | | | |
| | | | | 73.5 | 70 | 70 | 70 | 78.2 | 70 |
| Spiral flow (cm) | | | | 14 | 13 | 9 | 13 | 18 | 58 |
| Saturation magnetic flux density (T) | | | | Not molded | | | | 1.01 | 0.82 |

From Table 1, the spiral flow of the resin composition of each Example was sufficiently large. That is, it was shown that the resin composition according to the present embodiment is preferably applicable to the manufacturing of magnetic components by the transfer molding method.

In addition, the saturation magnetic flux density of the resin composition of each Example was equal to or more than 1.1 T, which was sufficiently large. This means that the resin composition according to the present embodiment is preferably used for manufacturing a small and lightweight magnetic component.

Priority is claimed on Japanese Patent Application No. 2019-183558, filed October 4, 2019, the disclosure of which is incorporated herein by reference.

### REFERENCE SIGNS LIST

10: winding
20: magnetic core
30: exterior member
100: coil
10B: winding
20B: magnetic core
30B: exterior member
100B: coil
10C: winding
20C: magnetic core
30C: exterior member
100C: integrated inductor

## Claims

1. A resin composition, which is used for transfer molding, comprising:
a resin (A);
a magnetic powder (B) having a median diameter of 7.5 to 100 µm; and
particles (C) having a median diameter of 0.2 to 5 µm,
wherein a saturation magnetic flux density of a molded article obtained by transfer molding the resin composition at 175°C is equal to or more than 1.1 T.

2. The resin composition according to claim 1,
wherein the resin (A) includes a thermosetting resin.

3. The resin composition according to claim 1 or 2,
wherein the resin (A) includes an epoxy resin.

4. The resin composition according to any one of claims 1 to 3,
wherein the resin (A) includes at least one epoxy resin selected from the group consisting of a bisphenol A-type epoxy resin, a bisphenol F-type epoxy resin, and an epoxy resin including a biphenyl structure.

5. The resin composition according to any one of claims 1 to 4, further comprising:
a curing agent (D).

6. The resin composition according to claim 5,
wherein the curing agent (D) includes at least one compound selected from the group consisting of a phenol compound and an amine compound.

7. The resin composition according to any one of claims 1 to 6,
wherein the particles (C) include a magnetic powder.

8. The resin composition according to any one of claims 1 to 7,
wherein the particles (C) include a non-magnetic powder.

9. The resin composition according to claim 8,
wherein the non-magnetic powder includes silica particles.

10. The resin composition according to any one of claims 1 to 9,
wherein the magnetic powder (B) includes iron-based particles.

11. The resin composition according to claim 10,
wherein the iron-based particles contain equal to or more than 90% by mass of Fe atoms.

12. The resin composition according to claim 7,
wherein the magnetic powder contains equal to or more than 90% by mass of Fe atoms.

13. A molded article formed of the resin composition according to any one of claims 1 to 12.
